Europäisches Patentamt

(19) European Patent Office

Office européen des brevets

(11) Numéro de publication: **0 145 665**
**B1**

(12) **FASCICULE DE BREVET EUROPEEN**

(45) Date de publication du fascicule du brevet:
16.08.89

(21) Numéro de dépôt: **84810591.2**

(22) Date de dépôt: **05.12.84**

(51) Int. Cl.⁴: **G 01 G 19/52**

(54) **Appareil de pesée destiné à être incorporé dans un élément encastrable et élément encastrable.**

(30) Priorité: **07.12.83 CH 6550/83**

(43) Date de publication de la demande:
**19.06.85 Bulletin 85/25**

(45) Mention de la délivrance du brevet:
**16.08.89 Bulletin 89/33**

(84) Etats contractants désignés:
**AT BE CH DE FR GB IT LI LU NL SE**

(56) Documents cités:
**US-A- 2 368 986**
**US-A- 3 193 034**

**PATENTS ABSTRACTS OF JAPAN, vol. 6, no. 104 (P-122)
[982], 15 juin 1982; & JP - A - 57 35 732 (MATSUSHITA
DENKI SANGYO K.K.) 26-02-1982**

(73) Titulaire: **Terraillon, Route de Thonon Juvigny,
F-74100 Annemasse (FR)**

(72) Inventeur: **Mairot, Guy, Chemin de la Ruaz Vetraz
Monthoux, F-74100 Annemasse (FR)**
Inventeur: **Perruche, Claude, Le Bourg,
F-74140 Douvaine (FR)**

(74) Mandataire: **Vuille, Roman et al, c/o KIRKER & Cie
S.A. 14, rue du Mont-Blanc Case Postale 872,
CH-1211 Genève 1 (CH)**

## Description

La présente invention concerne un appareil de pesée encastrable tel une balance de ménage ou de laboratoire et un élément encastrable.

De tels instruments sont d'un usage courant dans de nombreuses cuisines ou laboratoires industriels (voir US-A-2 368 986). L'exiguïté ou l'encombrement des surfaces réservées au travail proprement dit interdisent le plus souvent l'attribution en permanence d'une partie de ladite surface à un appareil de pesée. Il en résulte de fréquents déplacements des utilisateurs hors de leur place de travail ou de nombreux déplacements de l'appareil lui-même, ces derniers étant alors la source d'un déréglage qu'il convient de corriger avant chaque pesée. Dans un tel environnement en outre, lesdits appareils doivent être de préférence placés dans des armoires de rangement pour éviter une éventuelle contamination par des vapeurs ou des projections de liquides ou solides parfois corrosifs. Jusqu'à ce jour, aucune solution satisfaisante n'a été proposée au problème exposé ci-dessus.

La présente invention permet de surmonter de manière originale les inconvénients relevés plus haut par les moyens figurant dans les revendications 1 ou 6.

L'appareil de pesée et l'élément encastrables conformes à la présente invention peuvent être construits à peu de frais et de manière rationnelle pour s'adapter convenablement aux éléments encastrables utilisés de nos jours pour l'équipement de cuisines ou de laboratoires. De par sa conception originale, l'appareil de pesée selon l'invention peut être en outre dépourvu d'éléments usuels tels que le socle ou certaines parties du bâti par exemple. Les dessins annexés illustrent à titre non limitatif certaines des formes d'exécution de l'appareil de pesée selon la présente invention.

Fig. 1 est une vue d'ensemble illustrant une des formes d'exécution.

Fig. 2 est une coupe selon II–II de fig. 1.

Fig. 3 est une coupe selon III–III de fig. 1.

Fig. 4 représente, vue en coupe partielle, une autre exécution.

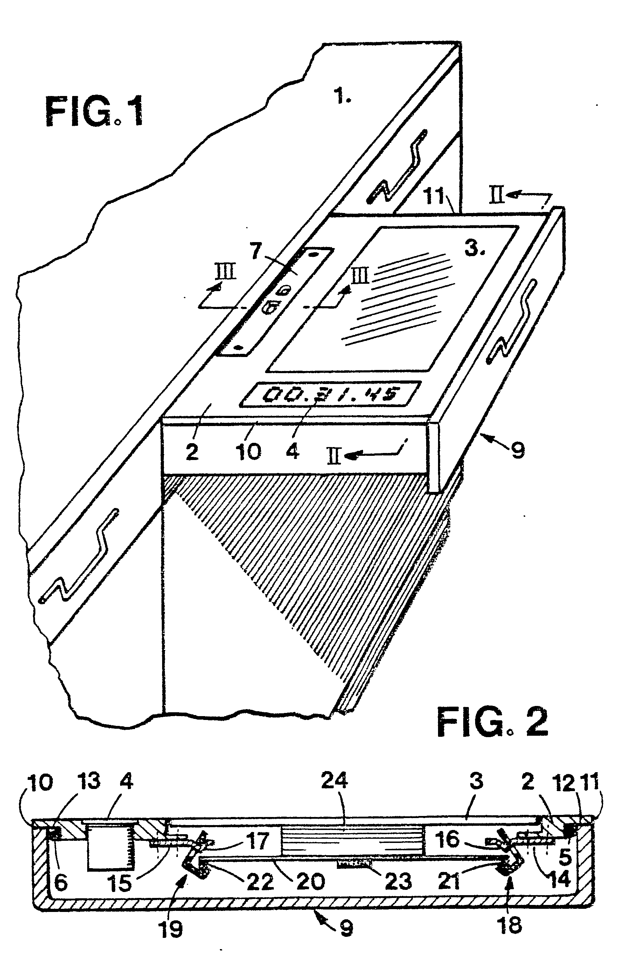

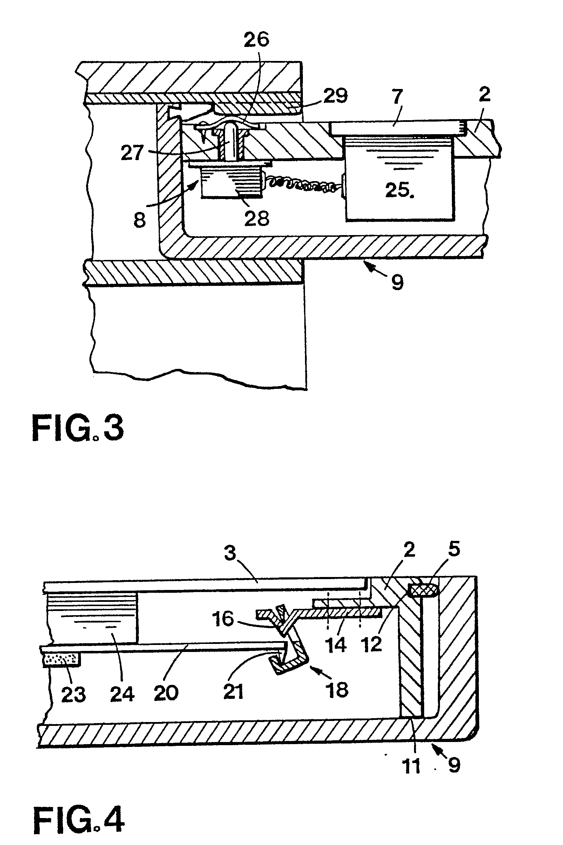

L'appareil de pesée comprend une plaque de recouvrement 2 prenant appui par au moins deux de ses arêtes 10, 11 sur au moins une des parois de l'élément encastrable 9. Dans la forme d'exécution illustrée par fig. 1 et 2, ladite plaque 2 prend appui sur deux des parois latérales de l'élément 9, tandis que dans la forme d'exécution illustrée par fig. 4, elle prend appui sur la paroi inférieure, c'est-à-dire le fond dudit élément 9. Il est entendu que la plaque peut également prendre appui par plus de deux arêtes sur plus de deux parois de l'élément encastrable 9.

Les dimensions de la plaque 2 seront calculées de façon telle que le pourtour de la partie supérieure de celle-ci coïncide avec celui de la surface supérieure de l'élément 9. Comme illustré par fig. 1 et 2, ladite partie supérieure peut se trouver dans le plan de la surface supérieure de l'élément 9; elle peut également, selon les cas, se situer en-dessous de ce plan, le plateau 3 et le tableau de lecture 4 demeurant cependant dans le plan de la partie supérieure de la plaque 2.

Bien que les éléments encastrables modernes tels que les tiroirs par exemple possèdent le plus généralement des dimensions standardisées, un ajustement exact de la plaque 2 dans l'élément 9 peut être parfois indispensable. A cet effet, ladite plaque peut être avantageusement pourvue de moyens assurant son positionnement. Dans une forme d'exécution de l'appareil, de tels moyens consistent en des joints souples 5, 6, par exemple faits de feutre ou d'un matériau élastomère, collés dans un épaulement 12, respectivement 13, aménagée dans la plaque 2; intercalés entre ladite plaque et les parois latérales de l'élément 9, ils exercent par compression l'effet souhaité. De tels joints peuvent avoir en outre une action antichocs. D'autres moyens de positionnement peuvent être envisagés, tels des ressorts ou des dispositifs écarteurs à vis par exemple. Selon la nature du matériau qui la compose et la forme de ses bords, la plaque 2 peut se passer de moyens de positionnement additionnels, l'élasticité de ladite plaque étant alors suffisante pour obtenir l'effet désiré.

L'appareil de pesée consiste en une balance électronique à affichage digital dont la plaque de recouvrement 2 fait office de moyen de suspension du mécanisme de pesée. On évite ainsi fort avantageusement l'emploi d'un socle sur lequel reposerait ledit mécanisme, d'où une diminution des pièces constitutives de l'appareil. Dans l'une des formes d'exécution données à titre d'exemple, des supports 14, 15, convenablement fixés à la partie inférieure de la plaque 2 présentent chacun un pli 16, respectivement 17, coopérant avec des couteaux mobiles 18, respectivement 19. Les couteaux mobiles 18 et 19 supportent une lame 20 possédant à chacune de ses extrémités des couteaux fixes 21 et 22. A la face inférieure de ladite lame, de préférence dans sa partie médiane, sont disposées une ou plusieurs jauges de contraintes reliées de façon connue, mais non représenté dans les dessins annexés, à un dispositif de mesure de la pesée. Le plateau 3 prend appui de façon connue sur ladite lame 20, par exemple à l'aide d'une entretoise 24.

Tout autre système de suspension, en particulier adapté à une balance électronique, peut être considéré. L'affichage de la mesure est également réalisé de façon connue à l'aide de moyens dont seul le tableau de lecture 4 est représenté.

Les moyens d'accès 7 au bloc d'alimentation en énergie 25 sont également situés dans le plan de la partie supérieure de la plaque 2, de façon à permettre un remplacement aisé de la source d'énergie utilisée, une pile par exemple. De tels moyens peuvent consister en un couvercle maintenu par encastrement ou à l'aide de vis par exemple.

L'appareil de pesée peut avantageusement comporter des moyens 8 de mise sous tension lorsque l'élément 9 est en position ouverte. De tels moyens peuvent consister en un enclencheur de fin de course tel qu'illustré, à titre d'exemple, par fig. 3: une membrane élastique 26 recouvre un poussoir 27 placé dans un logement correspondant coopérant avec un mécanisme 28 relié de façon connue au bloc d'alimentation en énergie 25. Lorsque l'élément 9 est en position ouverte (fig. 3), la membrane 26 s'écrase sous une butée 29 et actionne le poussoir 27 conditionnant la mise sous tension de l'appareil de pesée. Lorsque l'élément 9 est en position fermée, la membrane 26 et le poussoir 27 reprennent leur position de repos, provoquant ainsi la mise hors tension de l'appareil. Il est entendu que tout autre moyen tel un dispositif électro-mécanique ou électro-magnétique usuel peut être utilisé à cet effet.

L'élément encastrable 9 est le boîtier amovible d'un tiroir, fixé de façon connue sous le plan de travail 1. Un tel élément 9, contenant un appareil de pesée tel que défini ci-dessus, est également objet de la présente invention.

**Revendications**

1. Appareil de pesée, destiné à être incorporé dans un boîtier amovible d'un tiroir en tant qu'élément encastrable (9) sous un plan de travail (1), qui comprend une plaque de recouvrement (2) prenant appui sur ledit élément encastrable (9), un plateau de pesée (3) et un tableau d'affichage de la pesée (4) situés dans le plan de la partie supérieure de la plaque (2), la plaque (2) étant associée à des moyens de suspension (14, 15, 18, 19) du mécanisme de pesée (3, 20, 24).

2. Appareil de pesée selon la revendication 1, caractérisé en ce qu'il consiste en une balance électronique à affichage digital.

3. Appareil de pesée selon l'une des revendications 1 et 2, caractérisé en ce qu'il comporte des moyens pour assurer le positionnement de la plaque (2) dans l'élément encastrable.

4. Appareil de pesée selon l'une des revendications 1 à 3, caractérisé en ce qu'il comporte des moyens d'accès (7) au bloc d'alimentation en énergie situés dans le plan de la partie supérieure de la plaque (2).

5. Appareil de pesée selon l'une des revendications 1 à 4, caractérisé en ce qu'il comporte des moyens (8) pour le mettre sous tension lorsque l'élément encastrable est en position ouverte, ledit appareil étant mis hors tension lorsque l'élément encastrable est en position fermée.

6. Elément encastrable sous un plan de travail (1) qui se compose d'un boîtier amovible d'un tiroir (9) contenant un appareil de pesée tel que défini aux revendications 1 à 5 qui coïncide avec la surface supérieure dudit élément et dont la plaque de recouvrement (2) prend appui par deux de ses arêtes sur au moins une des parois dudit élément encastrable (9).

**Patentansprüche**

1. Wägevorrichtung zum Einbau in ein ausziehbares Gehäuse eines Einschubes wie beispielsweise in ein versenkbares Element (9) unter einer Arbeitsfläche (1) bestehend aus einer Abdeckplatte (2), für die das einschiebbare Element (9) als Auflage dient, einer Wiegeplatte (3) und einer Gewichtsanzeige (4), die in der Ebene des oberen Teiles der Abdeckplatte (2) angeordnet sind, wobei zur Platte (2) Aufhängemittel (14, 15, 18, 19) des Wägemechanismus (3, 20, 24) gehören.

2. Wägevorrichtung nach Patentanspruch 1, dadurch gekennzeichnet, daß sie aus einer elektronischen Waage mit Digitalanzeige besteht.

3. Wägevorrichtung nach einem der Patentansprüche 1 und 2, dadurch gekennzeichnet, daß sie Mittel zum Positionieren der Platte (2) im einschiebbaren Element enthält.

4. Wägevorrichtung nach einem der Patentansprüche 1 bis 3, dadurch gekennzeichnet, daß sie Zugangsmittel (7) zum Energiespeiseblock enthält, der im oberen Teil der Platte (2) angeordnet ist.

5. Wägevorrichtung nach einem der Patentansprüche 1 bis 3, dadurch gekennzeichnet, daß sie Mittel (8) enthält, um sie unter Spannung zu setzen, falls das einschiebbare Element herausgezogen ist, wogegen die Vorrichtung nicht unter Spannung steht, wenn das einschiebbare Element eingeschoben ist.

6. Einschiebbares Element unter einer Arbeitsfläche (1) das aus einem ausziehbaren Gehäuse eines Einschubes (9) besteht, der eine Wägevorrichtung enthält so wie in den Patentansprüchen 1 bis 5 festgelegt, die mit der oberen Fläche des besagten Elementes zusammenfällt, und wobei die Abdeckplatte mit zweien seiner Kanten mindestens auf einer der Wände des besagten einschiebbaren Elementes (9) aufliegt.

**Claims**

1. A weighing machine intended to be incorporated in a removable casing of a drawer as a flush-fitting element (9) under a working surface (1), which comprises a cover plate (2) bearing on the said flush-fitting element (9), a weighing platform (3) and a weighing indicator (4), all of which are located in the plane of the upper part of the plate (2), the plate (2) being associated with suspension means (14, 15, 18, 19) of the weighing mechanism (3, 20, 24).

2. The weighing machine according to Claim 1, characterized in that it consists of an electronic balance with a digital display.

3. The weighing machine according to Claim 1 or Claim 2, characterized in that it has means for ensuring that the plate (2) is positioned in the flush-fitting element.

4. The weighing machine according to any one of Claims 1 to 3, characterized in that it has means (7) providing access to the power supply, which are located in the plane of the upper part of the plate (2).

5. The weighing machine according to any one of Claims 1 to 4, characterized in that it has means (8) for supplying it with current when the flush-fitting element is in the open position, the current to the said machine being cut off when the flush-fitting element is in the closed position.

6. A flush-fitting element under a working surface (1), which is composed of a removable casing of a drawer (9) containing a weighing machine such as defined in Claims 1 to 5, which coincides with the upper surface of the said element and whose cover plate (2) bears via two of its edges on at least one of the sides of the said flush-fitting element (9).

# FIG. 1

# FIG. 2

FIG. 3

FIG. 4